# EUROPÄISCHE PATENTANMELDUNG

(11) **EP 1 707 651 A1**
(43) Veröffentlichungstag der Anmeldung: **04.10.2006**
(21) Anmeldenummer: 05007094.5
(22) Anmeldetag: 31.03.2005
(51) Int. Cl.: C23C 28/00, C23C 30/00, C23C 4/12, F01D 5/28

(54) **Schichtsystem und Verfahren zur Herstellung eines Schichtsystems**

(71) Anmelder: SIEMENS AKTIENGESELLSCHAFT, 80333 München (DE)
(72) Erfinder: Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE)

(57) **Zusammenfassung**

Schichtsysteme nach dem Stand der Technik weisen oft nicht die gewünschten Eigenschaften bezüglich ihrer Struktur oder Schichtdicke auf.

Das erfindungsgemäße Schichtsystem und Verfahren zur Herstellung eines Schichtsystems zeigen bzw. ergeben eine dünne Schicht aus α-Aluminiumoxid, wobei die Schicht aus Pulverteilchen (16) hergestellt wurde, die eine Hülle (22) beim Beschichtungsverfahren aufwiesen.

## Beschreibung

Die Erfindung betrifft ein Schichtsystem gemäß Anspruch 1 und ein Verfahren zur Herstellung eines Schichtsystems gemäß Anspruch 10.

Dünne Schichten, wie sie beispielsweise bei einer schützenden Oxidschicht auf einer Schicht des Typs McrAlx bekannt sind, können entweder durch Oxidation einer untenliegenden Schicht hergestellt werden oder durch Beschichtung mittels PVD-Verfahren oder einem elektrolytischen Verfahren.
Bei der Oxidation bildet sich nicht oder nicht vollständig die gewünschte Phase aus α-Aluminiumoxid aus.
Bei dem PVD-Verfahren bildet sich aus der Dampfphase ebenfalls nicht oder nicht vollständig das gewünschte α-Aluminiumoxid aus. Bei dem PVD- bzw. CVD-Verfahren liegt das Problem darin, dass sich das α-Aluminiumoxid erst während des Beschichtungsprozesses bilden muss und daher auch schwierig zu kontrollieren ist.
Bei dem elektrolytischen Verfahren kann das Aluminiumoxid nicht in einer Lösung gelöst werden, sondern müsste als Pulverteilchen abgeschieden werden, was jedoch aufwändig ist.

Die DE 198 07 359 A1 offenbart eine α-Aluminiumoxidschicht, die mittels eines PVD-Verfahrens aufgebracht wurde und eine Mindestschichtdicke von 1*µ*m aufweist.

Die US 6,365,222 offenbart, dass Beschichtungsmaterial und ein Polymer zusammen, aber getrennt voneinander verspritzt werden.

Es ist daher Aufgabe der Erfindung oben genanntes Problem zu überwinden.

Die Aufgabe wird gelöst durch ein Schichtsystem gemäß Anspruch 1 und ein Verfahren gemäß Anspruch 10.

In den Unteransprüchen sind weitere vorteilhafte Maßnahmen aufgelistet, die in vorteilhafter Art und Weise beliebig miteinander verknüpft werden können.

Es zeigen
- Figur 1, 2, 3: Schichtsysteme, die mit dem erfindungsgemäßen Verfahren hergestellt wurden,
- Figur 4: Beschichtungsmaterial,
- Figur 5: eine Turbinenschaufel,
- Figur 6: eine Brennkammer,
- Figur 7: eine Gasturbine.

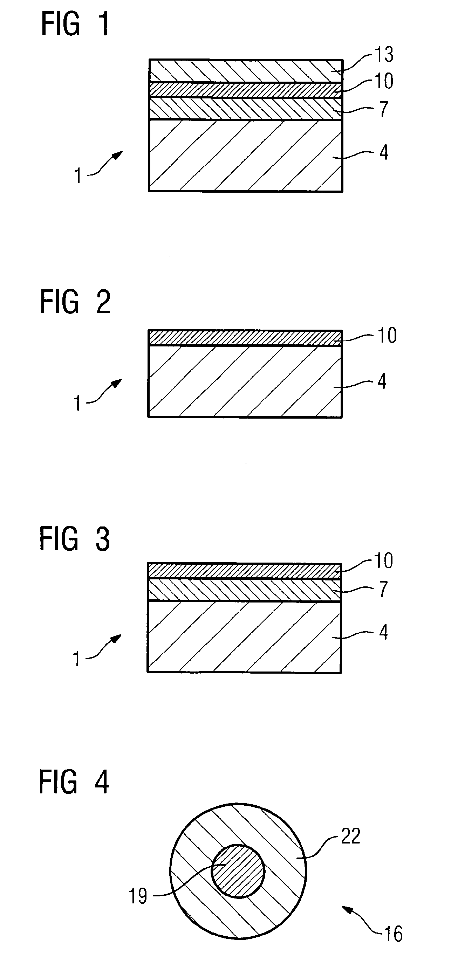

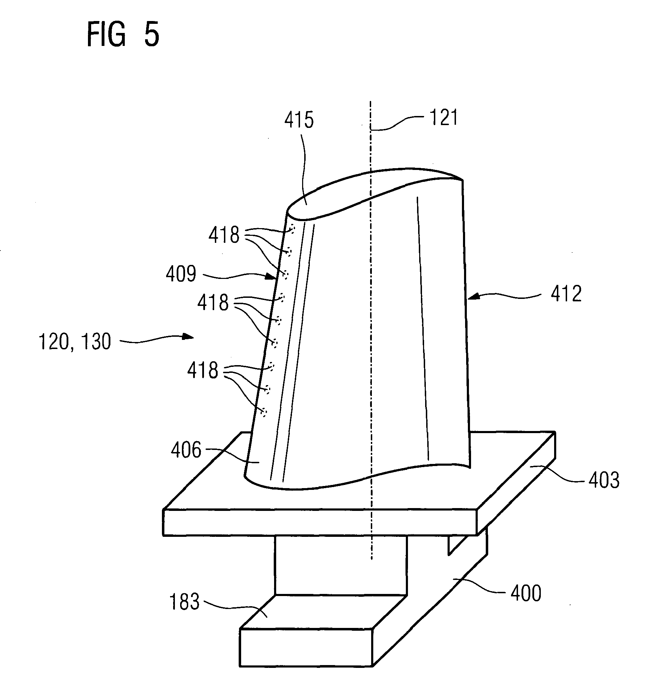

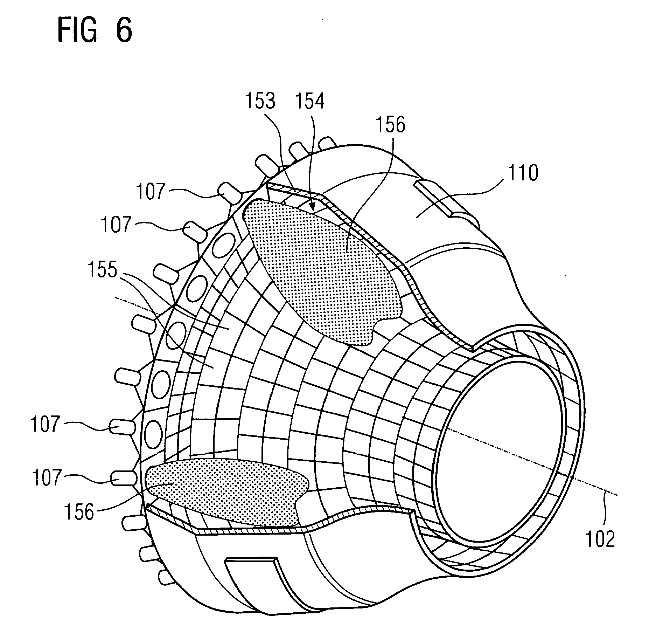

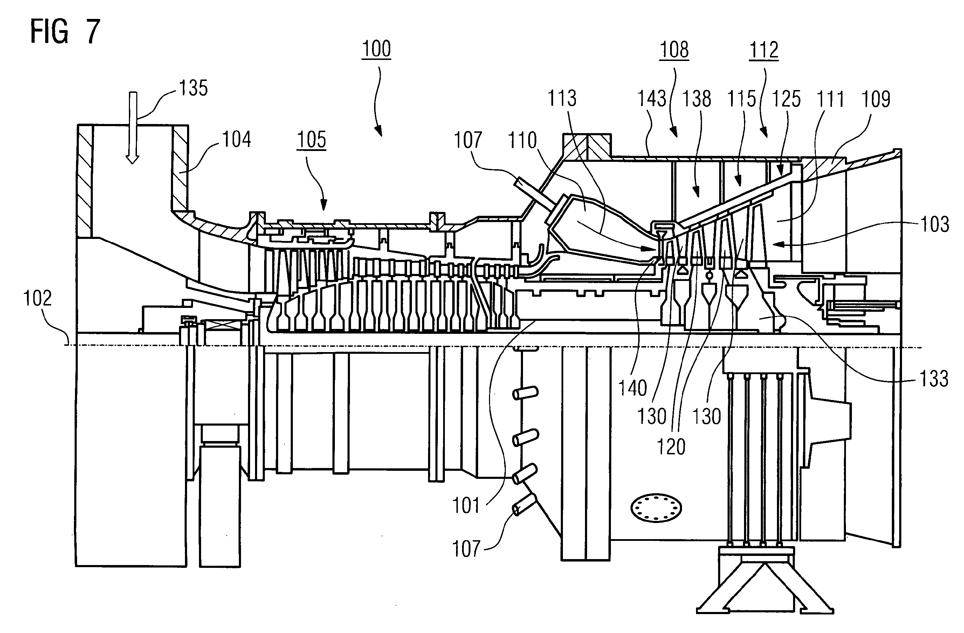

Die Figur 1 zeigt ein Schichtsystem 1, das zumindest aus einem Substrat 4 besteht.
Das Substrat 4 (Fig. 1, 2, 3) besteht insbesondere für Bauteile von Turbinen aus einer nickel-, kobalt- oder eisenbasierten Superlegierung. Solche Superlegierungen werden beispielsweise verwendet für Turbinenschaufeln 120, 130 (Fig. 5), Hitzeschildelemente 155 (Fig. 6) einer Gasturbine 100 (Fig. 7). Weitere Anwendungsbeispiele sind Bauteile einer Dampfturbine.

In dem erfindungsgemäßen Schichtsystem 1 ist eine Zwischenschicht 7 vorhanden, die beispielsweise die Zusammensetzung der Legierung MCrAlX aufweist. Auf dieser Zwischenschicht 7 ist erfindungsgemäß eine dünne Schicht 10 aufgebracht worden. Im Fall der Zwischenschicht 7 aus MCrAlX besteht die dünne Schicht 10 aus α-Aluminiumoxid. Die Schichtdicke der dünnen Schicht 10 beträgt 500nm oder weniger. Vorzugsweise ist die dünne Schicht 10 dünner als 300nm, 200nm oder 100nm.

Ebenso kann die Schichtdicke vorzugsweise zwischen 500nm und 300nm, zwischen 500nm und 200nm oder 500nm und 100nm sowie zwischen 300nm und 100nm oder zwischen 300nm und 200nm liegen. Weiterhin können dünne Schichten 10 vorzugsweise mit Schichtdicken zwischen 200nm und 100nm aufgebracht werden. Die dünne Schicht 10 wurde nicht durch Oxidation erzeugt, sondern separat aufgebracht.
Um diese dünne Schicht 10, bestehend aus Körnern, herzustellen, besteht die dünne Schicht 10 aus nanokristallinen Körnern, die Korngrößen im Nanometer-Bereich ≤500nm, ≤300nm oder vorzugsweise ≤100nm oder ≤50nm aufweisen.
Diese dünne Schicht 10 aus α-Aluminiumoxid dient beispielsweise zur Anbindung einer äußeren keramischen Wärmedämmschicht 13 (Fig. 1), beispielsweise auf Zirkonoxidbasis. Auf der äußeren Wärmedämmschicht 13 können noch abrasive Schichten aus Keramik vorhanden sein, die jedoch eins deutlich geringere Dichte als die Wärmedämmschicht 13 aufweisen. Ebenso können metallische Erosionsschutzschichten auf der äußeren Wärmedämmschicht vorhanden sein.

Die Schutzfunktion gegen Korrosion/Oxidation der Zwischenschicht 7 auf der Basis MCrA1X oder eines Substrats 4, das beispielsweise alitiert ist, besteht darin, dass sich möglichst phasenreines α-Aluminiumoxid bildet. Bilden sich andere Aluminiumoxidphasen ist die Schutzfunktion geringer. Daher ist es wichtig, dass nur α-Aluminiumoxid vorhanden ist, sodass die weitere Bildung von Aluminiumoxid durch Oxidation ebenfalls α-Aluminiumoxid ergibt.

Die dünne Schicht 10 wird beispielsweise wie folgt hergestellt.
Als Verfahren werden vorzugsweise das Hochgeschwindigkeitsspritzen (HVOF) oder das Kaltgasspritzen verwendet.
Diese Verfahren haben gegenüber dem Plasmaspritzen den Vorteil, dass sehr dichte Schichten erzeugt werden können.
Bei dem erfindungsgemäßen Verfahren werden Pulverteilchen 16 verwendet, die aus einem Kern 19 und einer Hülle 22 bestehen (Fig. 4). Der Kern 19 des Pulverteilchens 16 weist das gewünschte Material auf, vorzugsweise Keramik und vorteilhafterweise α-Aluminiumoxid.
Die Hülle 22 besteht aus einem Material, hier beispielsweise aus einem Metall, einem organischen, anorganischen Material, einem Polymer oder einem Binder bzw. Gemischen daraus.
Erst die Hülle 22 ermöglicht es, dass insbesondere die Nanopulver mit den bekannten Verfahren aufgebracht werden können. Der Kern 19 besteht vorzugsweise aus Körnern mit einem Durchmesser von ≤500nm oder ≤200nm. Als Durchmesser kann auch eine Diagonale eines Polymers verstanden werden.
Als besonders vorteilhaft haben sich Durchmesser ≤100nm oder ≤50nm erwiesen. Ebenso vorteilhaft sind Werte zwischen 100nm und 500nm, 100nm und 10nm oder 200nm und 500nm. Durch die dichte oder poröse Hülle 22 erreicht das Pulverteilchen 16 äußere Durchmesser von ≤10µm oder ≤5µm.
Die Hülle 22 zerbricht vorzugsweise beim Auftreffen auf das Substrat 4 oder auf dem bereits vorhandenen Teil der Schicht 10 oder wird entfernt,'beispielsweise durch Verdampfen.

Diese dünne Schicht 10 kann auch direkt auf dem Substrat 4 aufgebracht worden sein (Fig. 2) und dabei eine äußere Schicht (Fig. 2) oder Zwischenschicht bilden. Ebenso kann die dünne Schicht 10 auf einer Zwischenschicht 7 vorhanden sein und eine äußere Schicht bilden (Fig. 3).
Die anderen Schichten 7, 13 sind nicht dünn, d.h. sie sind mindestens 1µm oder vorzugsweise mindestens 10µm dick.

Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrA1X kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₄- d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 7 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrA1X kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schichtsystem (1),
zumindest bestehend aus
einem Substrat (4),
das eine Legierung darstellt,
zumindest einer Schicht (7, 10, 13)
wobei zumindest eine dünne Schicht (10) aufgebracht ist, die eine Schichtdicke ≤500nm aufweist,
die ein Oxid oder eine Verbindung eines Elements des Substrats (4) oder eines Elements der darunter liegenden Schicht (7) darstellt.

2. Schichtsystem (1) nach Anspruch 1,
**dadurch gekennzeichnet, dass**
die dünne Schicht (10) aus nanokristallinen Körnern besteht.

3. Schichtsystem nach Anspruch 1 oder 2,
**dadurch gekennzeichnet, dass**
die dünne Schicht (10) eine Schichtdicke ≤300nm aufweist.

4. Schichtsystem nach Anspruch 1 oder 2,
**dadurch gekennzeichnet, dass**
die dünne Schicht (10) eine Schichtdicke ≤200nm aufweist.

5. Schichtsystem nach Anspruch 1 oder 2,
**dadurch gekennzeichnet, dass**
die dünne Schicht (10) eine Schichtdicke ≤100nm aufweist.

6. Schichtsystem nach einem oder mehreren der Ansprüche 1 bis 5,
**dadurch gekennzeichnet, dass**
die dünne Schicht (10) eine äußere Schicht bildet.

7. Schichtsystem nach einem oder mehreren der Ansprüche 1 bis 6,
**dadurch gekennzeichnet, dass**
die dünne Schicht insbesondere direkt auf einem Substrat (4) aufgebracht ist.

8. Schichtsystem nach einem oder mehreren der Ansprüche 1 bis 6,
**dadurch gekennzeichnet, dass**
die dünne Schicht (10) auf einer Schicht (7) aufgebracht ist.

9. Schichtsystem nach Anspruch 1, 7 oder 8,
**dadurch gekennzeichnet, dass**
auf der dünnen Schicht (10) eine äußere Schicht (13) insbesondere eine keramische Wärmedämmschicht aufgebracht ist.

10. Verfahren zur Herstellung eines Schichtsystems (1), insbesondere eines Schichtsystems (1) nach Anspruch 1 bis 9,
**dadurch gekennzeichnet,**
**dass** das Material für die Schicht (7, 10, 13) als Pulver (16) vorliegt,
**dass** die Kerne (19) des Pulvers (16) eine Hülle (22) aufweisen und so als Beschichtungsmaterial auf das Substrat (4) zugeführt werden,
um eine Schicht, insbesondere eine dünne Schicht (10), zu erzeugen.

11. Verfahren nach Anspruch 10,
**dadurch gekennzeichnet, dass**
die Hülle (22) aus einem anderen Material als der Kern (19) des Pulvers (16) besteht.

12. Verfahren nach Anspruch 10 oder 11,
**dadurch gekennzeichnet, dass**
die Hülle (22) aus einem organischen, anorganischen Material, einem Polymer, einem Binder oder einem Gemisch daraus besteht.

13. Verfahren nach Anspruch 10,
**dadurch gekennzeichnet, dass**
als Beschichtungsverfahren das Hochgeschwindigkeitsspritzen (HVOF) oder das Kaltgasspritzen verwendet werden.

14. Schichtsystem oder Verfahren nach einem oder mehreren der vorherigen Ansprüche 1 bis 12,
**dadurch gekennzeichnet, dass**
das Material der dünnen Schicht (10) aus α-Aluminiumoxid besteht.

15. Schichtsystem nach Anspruch 2, 3, 4 oder 5 oder Verfahren nach Anspruch 6,
**dadurch gekennzeichnet, dass**
die Kerne (19) eine Größe ≤100nm,
insbesondere ≤50nm aufweisen.

16. Schichtsystem oder Verfahren nach Anspruch 1 oder 12,
**dadurch gekennzeichnet, dass**
die Zwischenschicht (7) aus einer Legierung des Typs MCrA1X besteht, und
dass insbesondere die äußere Schicht (13) eine Keramik-Wärmedämmschicht ist.

17. Schichtsystem oder Verfahren nach einem oder mehreren der vorherigen Ansprüche,
**dadurch gekennzeichnet, dass**
das Schichtsystem (1) ein neu hergestelltes oder wiederaufgearbeitetes Turbinenbauteil ist.

18. Verfahren nach Anspruch 6,
**dadurch gekennzeichnet, dass**
die Hülle (22) einen Außendurchmesser von höchstens 10*µ*m, insbesondere höchstens 5*µ*m hat.
